# EUROPÄISCHE PATENTSCHRIFT

(11) **EP 2 866 914 B1**
(45) Veröffentlichungstag und Bekanntmachung des Hinweises auf die Patenterteilung: **14.08.2019**
(21) Anmeldenummer: 13723100.7
(22) Anmeldetag: 14.05.2013
(51) Int. Cl.: B01D 35/30

(54) **FLÜSSIGKEITSFILTER MIT DÄMPFUNGSELEMENT**
LIQUID FILTER WITH A DAMPING ELEMENT
FILTRE À LIQUIDE POURVU D'UN ÉLÉMENT AMORTISSEUR

(30) Priorität: 28.06.2012 DE 102012211185
(43) Veröffentlichungstag der Anmeldung: 06.05.2015
(73) Patentinhaber: Robert Bosch GmbH, 70442 Stuttgart (DE)
(72) Erfinder: KUSTIC, Marko, 71672 Marbach (DE)
(86) Internationale Anmeldenummer: PCT/EP2013/059907
(87) Internationale Veröffentlichungsnummer: WO 2014/000948

(56) Entgegenhaltungen:
- WO-A1-01/54791
- WO-A1-2009/002501
- DE-A1- 4 222 136
- DE-A1- 4 326 651
- FR-A- 1 221 753

## Beschreibung

### Stand der Technik

Die Erfindung betrifft einen Flüssigkeitsfilter mit Dämpfungselement mit den Merkmalen des unabhängigen Vorrichtungsanspruchs sowie einen Filtereinsatz für einen Flüssigkeitsfilter.

Aus der DE 196 05 952 A1 ist ein Flüssigkeitsfilter bekannt. Derartige Flüssigkeitsfilter finden vielfach Anwendung als Kraftstofffilter oder Motorölfilter in Kraftfahrzeugen. Dabei werden sie insbesondere verwendet, um Partikel aus dem Kraftstoff oder dem Motoröl herauszufiltern. Dadurch sollen beispielsweise Komponenten eines Verbrennungsmotors, die stromabwärts des Flüssigkeitsfilters liegen, vor einer Beeinträchtigung oder gar einer Zerstörung durch diese Partikel geschützt werden.

Aus der WO 2009/002501 A1 ist eine Vibrationsdämpfung für Filtereinrichtungen bekannt.

Aus der DE 42 22 136 A1 ist ein Flüssigkeitsfilter mit einem Filterelement bekannt. Das Filterelement weist dabei eine obere Endkappe mit einem Durchlass auf, in den ein Stopfen aus Gummi eingeknöpft werden kann.

Aus der FR 1 221 753 ist ein Verfahren zur Herstellung von Filterelementen bekannt.

Aus der WO 01/54791 A1 ist ein Filtereinsatz für einen Flüssigkeitsfilter bekannt.

Aus der DE 43 26 651 A1 ist ein Flüssigkeitsfilter mit einem Filterelement bekannt. Das Filterelement weist eine Endkappe mit einem Durchlass auf, wobei in den Durchlass ein Formdichtring aus Gummi eingeknöpft ist.

Flüssigkeitsfilter, insbesondere für Kraftstoffe, bestehen häufig aus einem Gehäuse, in dem ein Filtereinsatz angeordnet ist und aus einem Anschlusselement mit wenigstens zwei Leitungen, wobei die eine Leitung zur Zuleitung der Flüssigkeit in den Flüssigkeitsfilter auf die Schmutzseite des Filtereinsatzes und die andere Leitung zur Ableitung der Flüssigkeit aus der Reinseite des Filtereinsatzes dienen.

Der Filtereinsatz besteht im Wesentlichen aus dem Filterelement, welches zwischen einer Endkappe und einem Anschlussdeckel dichtend festgelegt ist. Die Endkappe ist oft als Blindstück zur Abdichtung ausgelegt. Der Anschlussdeckel dient neben der Abdichtung gleichzeitig als Übergangselement an das Anschlusselement mit Flüssigkeitszu- und/oder -abführung. Endkappe und Anschlussdeckel bestehen in der Regel aus Metall oder einem harten Kunststoff, die über eine Bajonett-, Schraub- oder Steckverbindung fest mit dem Anschlusselement und/oder dem Gehäuse verbunden sind. Um die Dichtheit zwischen Filtereinsatz und Anschlusselement zu gewährleisten,
wird häufig noch zusätzlich eine Dichtung eingebracht. Oft steht der Filtereinsatz über die äußeren Enden seiner Endkappe und/oder über die äußeren Enden des Anschlussdeckels mit dem Gehäuse wenigstens abschnittsweise in Kontakt.

Beim Durchtritt der Flüssigkeit von der Schmutzseite des Filtereinsatzes auf die Reinseite des Filtereinsatzes bleiben in der Flüssigkeit befindliche Partikel, die eine gewisse Größe überschreiten, in dem Filterelement hängen, bzw. werden in Ihrer Fortbewegungsgeschwindigkeit stromabwärts stark verlangsamt, so dass die Flüssigkeit auf der Reinseite eine geringere Partikelkonzentration aufweist. Die Filterwirkung ist dabei abhängig von der Durchlässigkeit des Filterelements für die unerwünschten Partikel und von der Filterkapazität des Filtereinsatzes. Die Filterkapazität gibt dabei an, wie viele Partikel das Filterelement aufnehmen kann, bevor es verstopft bzw. bevor die Partikel durch das Filterelement von der Schmutzseite auf die Reinseite gelangen können, also bevor auf der Reinseite eine Partikelkonzentration festgestellt wird, die über einem erlaubten Schwellwert liegt. Die Durchlässigkeit des Filterelements wird v.a. durch das verwendete Material des Filterelements bestimmt. In der Regel werden vliesartige oder faserartige Materialien verwendet, die die Partikel in ihren Fasern festhalten.

Bei derartigen Flüssigkeitsfiltern steigt der Differenzdruck mit der Zeit an, was ihre Lebensdauer beschränkt. Ist der Differenzdruck zu hoch müssen die Flüssigkeitsfilter ersetzt werden.

### Offenbarung der Erfindung

### Vorteile der Erfindung

Gegenüber dem Stand der Technik weist die Vorrichtung mit den Merkmalen des unabhängigen Anspruchs den Vorteil auf, dass die Übertragung von Schwingungen des Filtergehäuses auf den Filtereinsatz und damit auch auf das Filterelement durch die Schwingungsdämpfung verringert wird, wodurch die Filterwirkung dauerhaft verbessert wird.

Es hat sich nämlich herausgestellt, dass insbesondere Schwingungen, denen das Filterelement ausgesetzt ist, die Filterwirkung beeinträchtigen können und damit die Lebensdauer begrenzen. Wird das Filterelement Schwingungen ausgesetzt, wie sie beispielsweise in Kraftfahrzeugen im Bereich von wenigen Hertz bis hin zu 15000 Hz auftreten, so kann die Filterwirkung, insbesondere für bereits mit Partikeln beladene Filterelemente, deutlich herabgesetzt werden. Denn die Schwingungen verringern das Haftvermögen der Partikel im Material des Filterelements, und die Partikel gelangen somit schneller auf die Reinseite des Filtereinsatzes. Je nach Art der Schwingung kann es auch zu einem unerwünschten plötzlichen, sprungartigen Austrag von Partikeln einer gewissen Größe auf die Reinseite des Filtereinsatzes kommen.

In der Regel bestehen der Anschlussdeckel und die Endkappe des Filtereinsatzes aus Materialien, die ein hohes Elastizitätsmodul, beispielsweise >1000 MPa, aufweisen. Steht der Filtereinsatz über derartige Materialien mit dem Gehäuse in Verbindung, so werden Schwingungen, beispielsweise über die Kraftstoffleitung oder die Befestigung des Filters am Motor oder an der Karosserie eines Kraftfahrzeugs auf das Filtergehäuse übertragen. Diese Schwingungen werden dann vom Filtergehäuse über das Anschlusselement und den Anschlussdeckel und/oder über die Endkappe des Filtereinsatzes auf das Filterelement übertragen. Die so auf das Filterelement übertragenen Schwingungen reduzieren die Filtrationseffizienz des Filters derart, dass die Lebensdauer des Filters sinkt und/oder dass es zu einer geringeren Filterwirkung kommt.

Durch die Erfindung wird vorteilhaft die Effizienz der Partikelabscheidung des Flüssigkeitsfilters erhöht, indem das "Freirütteln" von Partikeln im Filterelement auf die Reinseite des Flüssigkeitsfilters unterdrückt wird, besonders vorteilhaft wird das Risiko und die Häufigkeit sprungartigen Austrags von Partikeln auf die Reinseite des Filters verringert. Dadurch werden die stromabwärts des Filters gelegenen Komponenten effektiver vor Partikeln geschützt. Die erfindungsgemäße Vorrichtung lässt sich dabei vorteilhaft kostengünstig und ohne zusätzlichen Bauraum herstellen, da das Dämpfungselement in Bauteile integriert ist, die auch in herkömmlichen Filtern vorhanden sind und somit keine zusätzlichen Bauteile gegenüber herkömmlichen Filtern notwendig sind.

Erfindungsgemäß wird ein Flüssigkeitsfilter, insbesondere für Kraftstoffe, vorgeschlagen, wobei der Flüssigkeitsfilter ein Gehäuse aufweist, in dem ein Filtereinsatz angeordnet ist und wobei der Flüssigkeitsfilter weiterhin ein Anschlusselement aufweist, wobei das Anschlusselement für die Zuführung der Flüssigkeit in den Flüssigkeitsfilter und/oder für die Ableitung der Flüssigkeit aus dem Flüssigkeitsfilter vorgesehen ist und wobei der Filtereinsatz am Anschlusselement festgelegt ist. Erfindungsgemäß ist dabei der Filtereinsatz über wenigstens ein Dämpfungselement derart an dem Anschlusselement festgelegt, dass die Übertragung von Schwingungen des Gehäuses auf den Filtereinsatz gedämpft wird.

Vorteilhafte Ausbildungen und Weiterentwicklungen der Erfindung werden durch die in den abhängigen Ansprüchen angegebenen Maßnahmen ermöglicht.

Dadurch, dass das wenigstens eine Dämpfungselement aus einem Material mit einem Elastizitätsmodul kleiner als 100 MPa besteht, wird vorteilhaft erreicht, dass die Übertragung von Schwingungen des Gehäuses auf den Filtereinsatz besonders effizient gedämpft wird. Besonders vorteilhaft wird die Dämpfungswirkung dabei materialintrinsisch erreicht, so dass spezielle konstruktive und damit teure Ausgestaltungen des Dämpfungselements zur Anpassung der Dämpfungseigenschaften verzichtbar sind. Besonders vorteilhaft ist so eine kostengünstige Herstellung des Dämpfungselements möglich.

Eine besonders vorteilhafte Ausführungsform der Erfindung ergibt sich dadurch, dass das wenigstens eine Dämpfungselement aus Gummi, Kautschuk, Silikonkautschuk oder aus einem Kompositmaterial besteht, wobei das Kompositmaterial aus wenigstens einem Material aus der Gruppe Gummi, Kautschuk, Silikonkautschuk und aus wenigstens einem Material aus der Gruppe Aluminium oder einem thermoplastischen Kunststoff, insbesondere Polyoxymethylen (POM), besteht. Dadurch wird vorteilhaft eine kostengünstige Herstellung des Dämpfungselements ermöglicht. Besonders vorteilhaft ermöglicht die Verwendung von Kompositmaterialien eine konstruktive Anpassung des Dämpfungselements an die Erfordernisse des Flüssigkeitsfilters hinsichtlich mechanischer Stabilität und den gewünschten Dämpfungseigenschaften. Eine vorteilhafte Weiterbildung der Erfindung sieht vor, dass der Filtereinsatz in jedem Bereich, in dem der Filtereinsatz mit dem Gehäuse mechanischem Kontakt steht, wenigstens ein Dämpfungselement aufweist, so dass die Übertragung von Schwingungen des Gehäuses auf den Filtereinsatz gedämpft wird. Dadurch wird vorteilhaft erreicht, dass eine radiale Halterung des Filtereinsatzes im Gehäuse ermöglicht wird und dass durch die Dämpfung der Übertragung von Schwingungen des Gehäuses auf den Filtereinsatz und damit auf das Filterelement die Filterwirkung verbessert wird. Besonders vorteilhaft wird dadurch das Risiko und die Häufigkeit sprungartigen Austrags von Partikeln auf die Reinseite des Flüssigkeitsfilters verringert.

Dadurch, dass der Filtereinsatz am Anschlusselement nur mittels des Anschlusselements im Gehäuse befestigt ist, und dass der Filtereinsatz zumindest bei Abwesenheit von an dem Gehäuse angreifenden Schwingungsbelastungen die Innenwand des Gehäuses nicht berührt wird vorteilhaft erreicht, dass neben dem Anschluss des Filtereinsatzes am Anschlusselement keine mechanischen Verbindungen und/oder Kontaktstellen zwischen dem Filtereinsatz und dem Gehäuse und/oder Anschlusselement bestehen, wodurch die Übertragung von Schwingungen aus dem Gehäuse auf den Filtereinsatz und damit auf das Filterelement wesentlich reduziert wird. Dies verbessert besonders vorteilhaft die Filterwirkung und wirkt dem Risiko und der Häufigkeit sprunghaften Austrags von Partikeln aus dem Filterelement auf die Reinseite des Filtereinsatzes entgegen.

Dadurch, dass das Anschlusselement zumindest abschnittsweise als Dämpfungselement ausgebildet ist, insbesondere ein Endabschnitt des Anschlusselements, der dem Filtereinsatz zugewandt ist, wird vorteilhaft erreicht, dass die Herstellung des Flüssigkeitsfilters besonders kostengünstig ist. Besonders vorteilhaft wird dadurch die Dämpfung der Übertragung von Schwingungen des Gehäuses auf den Filtereinsatz durch nur ein Dämpfungselement erreicht, das sich vorteilhaft auswechseln lässt. Besonders vorteilhaft kann dadurch der Filtereinsatz in herkömmlicher Weise hergestellt werden.

Dadurch, dass der Filtereinsatz direkt am Dämpfungselement festgelegt ist, wird vorteilhaft erreicht, dass die Schwingungen des Gehäuses besonders effizient gedämpft werden und dass das Dämpfungselement gleichzeitig die Funktion der Abdichtung zwischen Anschlusselement und Filtereinsatz übernehmen kann wodurch vorteilhaft ein weiteres Dichtelement eingespart werden kann.

Eine besonders vorteilhafte Ausführungsform der Erfindung ergibt sich dadurch, dass der Filtereinsatz einen Anschlussdeckel aufweist, wobei der Anschlussdeckel wenigstens bereichsweise als Dämpfungselement ausgebildet ist. Dadurch wird vorteilhaft erreicht, dass eine besonders vorteilhafte Schwingungsdämpfung erzielbar ist, da der Anschlussdeckel ein großes Materialvolumen für die Ausbildung als Dämpfungselement bietet. Weiterhin wird vorteilhaft bewirkt, dass kein zusätzliches Bauteil für die Schwingungsdämpfung im Flüssigkeitsfilter verbaut werden muss, wodurch vorteilhafterweise der Bauraum gering gehalten werden kann und dass vorteilhaft bestehende Dicht- und Anschlusskonzepte verwendet werden können. Ferner wird vorteilhaft erreicht, dass die Schwingungsdämpfung am Filtereinsatz erfolgt und so nach jedem Wechsel des Filtereinsatzes die Schwingungsdämpfung in voller Wirkung, insbesondere ohne Alterungseffekt, vorhanden ist.

Dadurch, dass der Filtereinsatz mit einem Filterelement versehen ist, wobei das Filterelement radial zur Längsachse des Filtereinsatzes durchströmbar ist, wobei das Filterelement zwei gegenüberliegende Stirnseiten aufweist und an seinen Stirnseiten dicht zwischen einem Anschlussdeckel und einer Endkappe festgelegt ist, wobei der Anschlussdeckel eine insbesondere zentrisch liegende Öffnung aufweist wird vorteilhaft eine besonders einfache und kostengünstige Herstellung des Flüssigkeitsfilters erreicht.

In einer vorteilhaften Weiterbildung der Erfindung weist der Anschlussdeckel einen an der Öffnung des Anschlussdeckels angeordneten Stutzen auf, wobei der Stutzen wenigstens bereichsweise als Dämpfungselement ausgebildet ist. Dadurch wird vorteilhaft bewirkt, dass die Schwingungen des Gehäuses bereits vor dem Übergang zwischen Stutzen und Anschlussdeckel gedämpft werden. Weiterhin können vorteilhaft bestehende Dicht- und Anschlusskonzepte verwendet werden. Besonders vorteilhaft kann bei entsprechender Materialauswahl des Dämpfungselements durch die Weiterbildung der Erfindung der Stutzen auch die Funktion der Abdichtung zwischen dem Filtereinsatz und dem Anschlusselement übernehmen und somit vorteilhaft auf ein zusätzliches Dichtelement zwischen Stutzen und Anschlusselement verzichtet werden.

Eine vorteilhafte Weiterbildung der Erfindung sieht vor, dass das Element, umfassend den Anschlussdeckel und den Stutzen, einstückig ausgeführt ist. Dadurch wird vorteilhaft eine besonders kostengünstige Herstellung und eine besonders dichte Ausführung des Filtereinsatzes ermöglicht.

Erfindungsgemäß kann der Stutzen an seinem Außenumfang und/oder an seinem Innenumfang ein Profil mit Rippenform und Wellenform, insbesondere ein Tannenbaumprofil, aufweisen, wobei der Stutzen über das Profil mit dem Anschlusselement verbunden ist. Dadurch wird vorteilhaft erreicht, dass im Stutzen die Dichtungsfunktion und die Arretierungsfunktion des Filtereinsatzes gegenüber dem Anschlusselement integriert sind, wodurch sich eine besonders einfache und kostengünstige Herstellung des Flüssigkeitsfilters ergibt. Besonders vorteilhaft kann dabei auf ein zusätzliches Dichtelement zwischen Anschlusselement und Filtereinsatz verzichtet werden.

Erfindungsgemäß kann die Endkappe mit dem Gehäuse wenigstens bereichsweise mittelbar oder unmittelbar in Kontaktbereichen mechanisch in Kontakt stehen, wobei für jeden Kontaktbereich wenigstens ein weiteres Dämpfungselement derart vorhanden ist, dass die Übertragung von Schwingungen des Gehäuses auf den Filtereinsatz gedämpft wird. Dadurch wird vorteilhaft erreicht, dass eine radiale Halterung des Filtereinsatzes im Gehäuse ermöglicht wird, die dem Filtereinsatz im Gehäuse die für den Betrieb notwendige Stabilität gibt und damit die mechanische Haltbarkeit und Lebensdauer erhöht und dass gleichzeitig durch die Dämpfung der Übertragung von Schwingungen des Gehäuses auf den Filtereinsatz und damit auf das Filterelement die Filterwirkung verbessert wird. Besonders vorteilhaft wird erfindungsgemäß eine besonders kostengünstige Herstellung des Filtereinsatzes und eine besonders einfache und kostengünstige Montage des Filtereinsatzes in das Gehäuse ermöglicht.

### Kurze Beschreibung der Zeichnungen

Ausführungsbeispiele der Erfindung sind in den Zeichnungen dargestellt und werden in der nachfolgenden Beschreibung näher erläutert.

Es zeigen:
**Fig. 1** einen Querschnitt durch einen Flüssigkeitsfilter gemäß einem ersten Ausführungsbeispiel;
**Fig. 2a** einen Querschnitt durch eine zweite alternative Ausführungsform des Filtereinsatzes in einem Flüssigkeitsfilter gemäß Fig. 1;
**Fig. 2b** einen Querschnitt durch eine dritte alternative Ausführungsform des Filtereinsatzes in einem Flüssigkeitsfilter gemäß Fig. 1;
**Fig. 2c** einen Querschnitt durch eine vierte alternative Ausführungsform des Filtereinsatzes in einem Flüssigkeitsfilter gemäß Fig. 1;
**Fig. 3a** einen Querschnitt durch einen Flüssigkeitsfilter gemäß einem zweiten Ausführungsbeispiel;
**Fig. 3b** einen Querschnitt durch eine zweite alternative Ausführungsform des Anschlusselements eines Flüssigkeitsfilters gemäß Fig. 3a;
**Fig. 3c** einen Querschnitt durch eine dritte alternative Ausführungsform des Anschlusselements eines Flüssigkeitsfilters gemäß Fig. 3a;;
**Fig. 4a** einen Querschnitt durch den Endkappenbereich des Gehäuses eines Flüssigkeitsfilters gemäß einem dritten Ausführungsbeispiel;
**Fig. 4b** einen Querschnitt durch den Endkappenbereich des Gehäuses einer zweiten alternativen Ausführungsform eines Flüssigkeitsfilters gemäß Fig. 4a;
**Fig. 4c** einen Querschnitt durch den Endkappenbereich des Gehäuses einer dritten alternativen Ausführungsform eines Flüssigkeitsfilters gemäß Fig. 4a.

### Ausfiihrungsformen der Erfindung

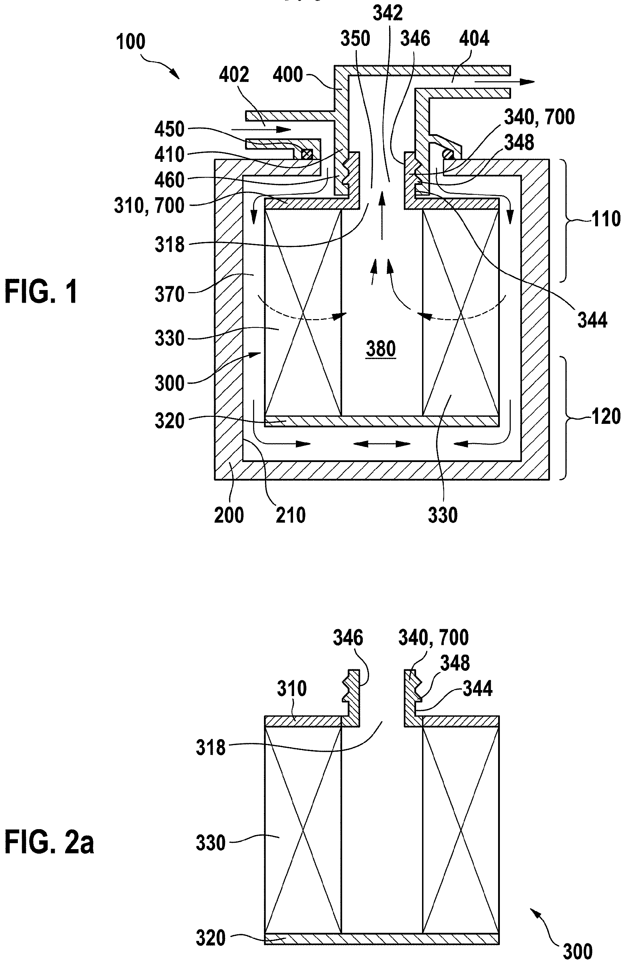

**Figur 1** zeigt dabei ein erstes Ausführungsbeispiel eines erfindungsgemäßen Flüssigkeitsfilters (100) mit einem Gehäuse (200), einem im Gehäuse (200) angeordneten Filtereinsatz (300) mit einem Filterelement (330) und einem Anschlusselement (400).

Der Filtereinsatz (300) besteht aus einem hohlzylindrischen Filterelement (330), das bevorzugt sternförmig gefaltet ist und das in diesem Ausführungsbeispiel radial von der zu filternden Flüssigkeit durchströmt wird. In anderen, hier nicht dargestellten, Ausführungsformen kann das Filterelement in axialer Richtung durchströmt werden. Das Filterelement ist bevorzugt aus einem vliesartigen oder faserartigen Material gefertigt und kann hydrophile oder hydrophobe Eigenschaften aufweisen. Die zu filtrierenden Substanzen, bevorzugt Partikel, bleiben in den Fasern oder dem Vlies entweder dauerhaft hängen oder werden zumindest in ihrer stromabwärtsgerichteten Geschwindigkeit stark verlangsamt. Das Filterelement (330) ist an seinen Stirnseiten zwischen einer Endkappe (320), die im dargestellten Ausführungsbeispiel als Blindstück ausgeführt ist, und zwischen einem Anschlussdeckel (310) dicht festgelegt, beispielsweise durch eine Klebung, Vulkanisierung oder eine Verschweißung des Filterelements (330) mit der Endkappe (320) und dem Anschlussdeckel (310). Der Anschlussdeckel (310) weist ferner eine bevorzugt zentrisch angeordnete Öffnung (318) auf. Dabei kann die Endkappe (320) in einer hier nicht dargestellten Ausführungsform auch mit einer Öffnung versehen sein, beispielsweise in einem Kraftstofffilterkonzept mit separater Wasserabscheidung. Der Filtereinsatz (300) liegt mit seinem Anschlussdeckel (310) in einem Anschlussdeckelbereich (110) des Gehäuses (200) und mit deiner Endkappe (320) in einem Endkappenbereich (120) des Gehäuses.

Das Filterelement (330) trennt eine Schmutzseite (370) von einer Reinseite (380) des Filtereinsatzes, wobei im hier dargestellten Ausführungsbeispiel die Reinseite (380) im Inneren des Filtereinsatzes (300) liegt und die Schmutzseite (370) der Innenwand (210) des Gehäuses (200) zuweist. In einem hier nicht dargestellten Ausführungsbeispiel kann der Flüssigkeitsfilter (100) auch so konstruiert sein, dass die Reinseite (370) der Innenwand (210) des Gehäuses (200) zuweist und die Schmutzseite (370) im Inneren des Filtereinsatzes (300) liegt.

Auf dem Anschlussdeckel (310) ist über der Öffnung (318) ein Stutzen (340) festgelegt, der in seinem Inneren einen Durchführungskanal (342) aufweist, welcher mit der Öffnung (318) im Anschlussdeckel (310) dicht zu einem Leitungskanal (350) verbunden ist. Dabei ist der Anschlussdeckel (310) mit dem Stutzen (340) im dargestellten Ausführungsbeispiel einstückig ausgeführt. Der Stutzen (340) weist an der Wand des Durchgangskanals (342) einen Innenumfang (346) auf. An seinem an der Außenseite gelegenen Außenumfang (344) weist der Stutzen (340) ein rippenförmiges Profil (348), besonders bevorzugt ein Tannenbaumprofil, auf. Über dieses Profil (348) wird der Stutzen und damit der Filtereinsatz (200) fest und dicht entlang der Längsrichtung des Anschlusselements (400) festgelegt, bevorzugt in Form einer Steckverbindung (460). Auf diese Weise wird die Reinseite (380) des Filtereinsatzes (300) auch im Flüssigkeitsfilter (100) von der Schmutzseite (370) getrennt. Das Profil (348) des Stutzens (340) kann jedoch auch derart ausgeführt sein, dass das Anschlusselement (400) auf den Stutzen (340) aufgeschraubt ist oder in Form eines Bajonettverschlusses mit dem Stutzen (340) verbunden ist.

Bevorzugt weist das Profil (348) wenigstens eine Rippe auf, bevorzugt zwei oder drei Rippen. Das Profil (348) kann auch eine Wellenform aufweisen oder sowohl Rippen als auch eine Wellenform.

Bevorzugt haben die Rippen einen Durchmesser von 10 bis 60 mm und sind über dem Außenumfang erhaben in einem bevorzugten Bereich von 0,25 bis 5 mm, besonders bevorzugt in einem Bereich von 1 bis 3 mm. Die Rippen weisen bevorzugt eine halbkreisförmige, sägezahnförmige, dreieckige, rechteckige oder halbelliptische Form auf, ohne auf diese Formen beschränkt zu sein.

Das Anschlusselement (400) weist bevorzugt wenigstens zwei Leitungen auf, nämlich eine erste Leitung (402), die der Zuführung von Flüssigkeit in den Flüssigkeitsfilter (100) dient, sowie eine zweite Leitung (404), die der Ableitung von Flüssigkeit aus dem Flüssigkeitsfilter (100) dient. Die zweite Leitung (404) verläuft dabei innerhalb der ersten Leitung (402). Das Anschlusselement (400) ist auf dem Gehäuse (200) mittels einer Dichtung (450) dicht festgelegt. Jedoch sind auch Ausführungsformen (hier nicht dargestellt) möglich, bei denen die erste Leitung (402) und die zweite Leitung (404) nicht ineinander verlaufen, sondern als parallele Leitungen ausgeführt sind. In solch einer Ausführungsform wird der Stutzen (340) des Filtereinsatzes bevorzugt nur an einer der beiden Leitungen (402, 404) festgelegt.

Im dargstellten Flüssigkeitsfilter (100) ist der Anschlussdeckel (310) mitsamt dem Stutzen (340) als Dämpfungselement (700) ausgeführt. Dadurch wird bewirkt, dass die Übertragung von Schwingungen des Gehäuses auf den Filtereinsatz (300) und damit auf das Filterelement (330) gedämpft wird.

Um die Schwingungsdämpfung möglichst effizient zu bewirken wird der Filtereinsatz (300) bevorzugt derart am Anschlusselement (400) befestigt, dass er an keiner weiteren Stelle mechanisch mit dem Gehäuse (200) in Kontakt tritt, also freischwebend über das Anschlusselement im Gehäuse gehaltert ist. Zumindest im Ruhezustand des Flüssigkeitsfilters (100), d.h. bei Abwesenheit von am Gehäuse (200) angreifenden Schwingungsbelastungen soll der Filtereinsatz (300) die Innenwand des Gehäuses nicht berühren.

In einem hier nicht dargestellten Ausführungsbeispiel, bei dem der Filtereinsatz (300) mit der Innenwand des Gehäuses (200) in Kontaktbereichen mechanisch mittelbar oder unmittelbar in Kontakt steht, ist in jedem Kontaktbereich ein Dämpfungselement (700) vorgesehen, das die Übertragung von Schwingungen des Gehäuses (200) auf den Filtereinsatz (300) dämpft.

In **Fig. 2a** ist ein Querschnitt durch eine zweite alternative Ausführungsform des Filtereinsatzes (300) in einem erfindungsgemäßen Flüssigkeitsfilter (100) gemäß Fig. 1 dargestellt. In dieser alternativen Ausführungsform ist der Stutzen (340) das Dämpfungselement (700). Der Stutzen (340) weist dabei wie in **Fig. 1** an seinem Außenumfang (344) ein Profil (348), bevorzugt ein Tannenbaumprofil auf, wodurch er an einem Anschlusselement (400) dicht und festgelegt werden kann, bevorzugt auf das Anschlusselement (400) aufgesteckt werden kann. Der Stutzen (340) kann dabei dicht über der Öffnung (318) des Anschlussdeckels (310) festgelegt sein, er kann jedoch auch im Innenumfang der Öffnung (318) des Anschlussdeckels (310) dicht befestigt sein. Der Stutzen (340) besteht dabei bevorzugt aus einem Material mit einem Elastizitätsmodul kleiner als 100MPa, das gleichzeitig so weich ist, dass es als Dichtung gegenüber einem Anschlusselement (400) verwendet werden kann. Anschlussdeckel (310) und Endkappe (320) weisen in diesem Ausführungsbeispiel keine dämpfenden Eigenschaften auf. Sie können aus einem mechanisch stabilen Material gefertigt sein, beispielsweise aus Metall oder einem duroplastischen oder thermoplastischem Kunststoff.

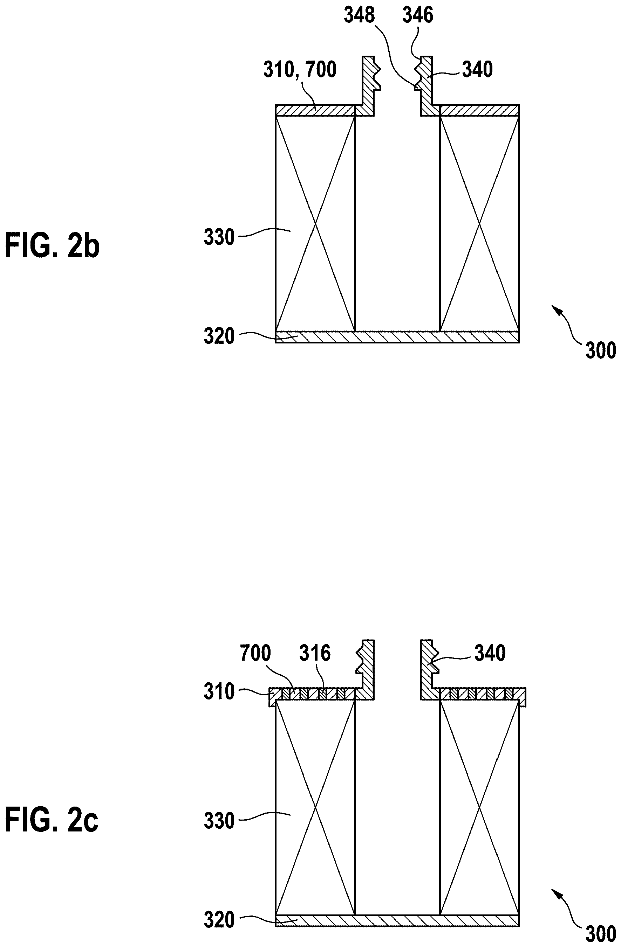

**Figur 2b** zeigt einen Querschnitt durch eine dritte alternative Ausführungsform des Filtereinsatzes (300) in einem erfindungsgemäßen Flüssigkeitsfilter (100) gemäß Fig. 1. In dieser Ausführungsform ist der Anschlussdeckel (310) das Dämpfungselement (700). Der Stutzen (340) weist demgegenüber in diesem Ausführungsbeispiel keine schwingungsdämpfende Funktion auf und kann aus einem mechanisch stabilen Material gefertigt sein, beispielsweise aus Metall oder einem duroplastischen oder thermoplastischem Kunststoff. In diesem Ausführungsbeispiel weist der Stutzen (340) an seinem Innenumfang (346) ein Profil (348) auf, bevorzugt ein Tannenbaumprofil, wodurch er an einem Anschlusselement (400) dicht und fest angeordnet werden kann, bevorzugt auf das Anschlusselement (400) in Form einer Steckverbindung (460) aufgesteckt werden kann. Das Profil (348) kann dabei auch derartig ausgeführt sein, dass ein Anschluss des Stutzens (340) über das Profil (348) an das Anschlusselement (400) beispielsweise über eine Schraubverbindung, eine Bajonettverbindung oder eine Steckverbindung ermöglicht wird, die eine feste und dichte Festlegung des Filtereinsatzes (300) an dem Anschlusselement (400) ermöglicht. Der Stutzen (340) kann dabei dicht über der Öffnung (318) des Anschlussdeckels (310) festgelegt sein, er kann jedoch auch im Innenumfang der Öffnung (318) des Anschlussdeckels (310) dicht befestigt sein.

**Figur 2c** zeigt einen Querschnitt durch eine vierte alternative Ausführungsform des Filtereinsatzes (300) in einem erfindungsgemäßen Flüssigkeitsfilter (100) gemäß Fig. 1.

Abhängig vom Systemdruck in einem Flüssigkeitsfilter (100) kann es notwendig sein, das schwingungsdämpfende Material des Dämpfungselements mechanisch zu stabilisieren. Vorteilhaft ist es in diesem Fall, das weiche und dämpfende Material, beispielsweise Gummi, Kautschuk oder Silikonkautschuk, bevorzugt ein Material mit einem Elastizitätsmodul kleiner als 100 MPa durch ein zusätzliches steifes Material zu verstärken, beispielsweise durch einen thermoplastischen Kunststoff, bevorzugt POM oder ein Metall oder eine Metalllegierung, beispielsweise Aluminium. Dabei kann das steifere Material in das dämpfende Material eingelassen sein.

In **Fig. 2c** ist ein Filtereinsatz (300) dargestellt, bei dem der Anschlussdeckel (310) abschnittsweise, hier in konzentrischen Ringen, als Dämpfungselement (700) ausgeführt ist, wobei die konzentrischen Ringe der Dämpfungselemente (700) sich mit daran anschließenden, konzentrischen nicht dämpfenden Abschnitten (316) abwechseln. Die nicht dämpfenden Abschnitte (316) bestehen dabei aus steiferem und mechanisch stabilerem Material.

In einer anderen, hier nicht dargestellten Ausführungsform, können die nicht dämpfenden Abschnitte (316), bevorzugt aus steiferem Material, auch als Stützring über und/oder unter dem Dämpfungselement (700) angeordnet und mit diesem wenigstens teilweise verbunden sein, jedoch ohne mit dem Gehäuse (200) in direktem mechanischem Kontakt zu stehen. Der Stutzen (340) weist in dieser Ausführungsform keine schwingungsdämpfende Funktion auf und kann aus einem mechanisch stabilen Material gefertigt sein, beispielsweise aus Metall oder einem duroplastischen oder thermoplastischem Kunststoff. Der Stutzen (340) weist dabei wie in **Fig. 1** an seinem Außenumfang (344) ein Profil (348), bevorzugt ein Tannenbaumprofil auf, wodurch er an einem Anschlusselement (400) dicht festgelegt werden kann, bevorzugt auf das Anschlusselement aufgesteckt werden kann. In anderen Ausführungsformen der Erfindung sind jedoch auch andere Profilformen möglich, die eine Schraub- Steck- oder Bajonettverbindung zur Festlegung des Filtereinsatzes (300) an dem Anschlusselement (400) ermöglichen. Der Stutzen (340) kann dabei dicht über der Öffnung (318) des Anschlussdeckels (310) festgelegt sein, er kann jedoch auch im Innenumfang der Öffnung (318) des Anschlussdeckels (310) dicht befestigt sein.

Neben der konstruktiven Anordnung des Dämpfungselements (700) am Filtereinsatz (300) kann das Dämpfungselement (700) auch am Anschlusselement (400) angeordnet sein, um so beispielsweise weiterhin herkömmliche Filtereinsätze zu verwenden und dennoch eine gute Schwingungsdämpfung zu erzielen.

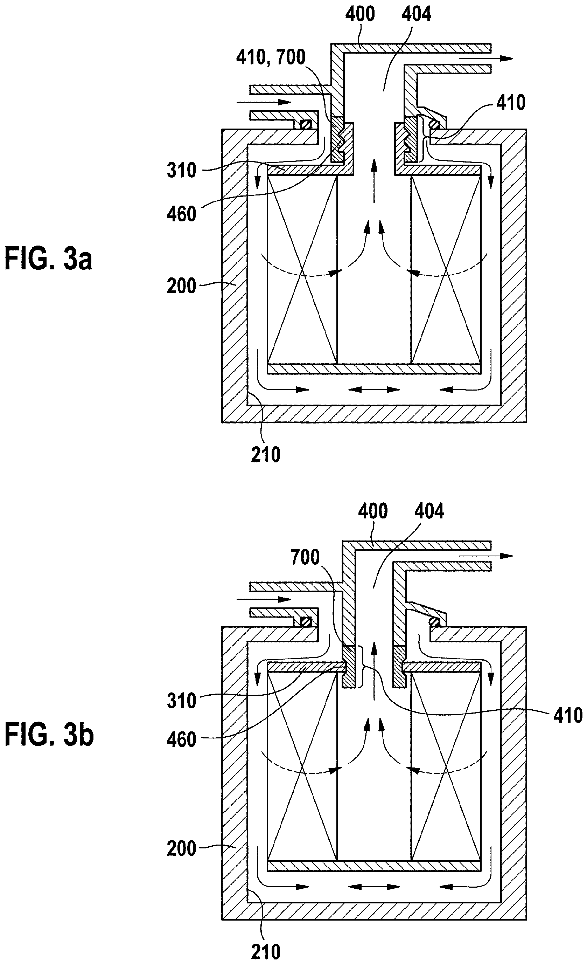

**Figur 3a** zeigt einen Querschnitt durch einen Flüssigkeitsfilter gemäß einem zweiten erfindungsgemäßen Ausführungsbeispiel. Dargestellt ist ein Flüssigkeitsfilter (100), bei dem ein Endabschnitt (410) der zweiten Leitung (404) des Anschlusselements (400) das Dämpfungselement (700) ist. In diesem Ausführungsbeispiel ist der Filtereinsatz (300) am Stutzen (340) des Anschlussdeckels (310) im Endabschnitt (410) des Anschlusselements (400) dichtend eingesteckt, wodurch der Filtereinsatz (300) gehaltert wird und wodurch im Flüssigkeitsfilter (100) die Reinseite (380) des Filtereinsatzes (300) von der Schmutzseite (370) des Filtereinsatzes (300) getrennt ist. Der Anschlussdeckel (310) ist in diesem Ausführungsbeispiel aus einem nicht dämpfenden Material ausgeführt. Jedoch sind auch Ausführungsbeispiele denkbar, bei denen der Anschlussdeckel (310) und/oder der Stutzen (340) wenigstens abschnittsweise als Dämpfungselement (700) ausgeführt sind und am ebenfalls als ein weiteres Dämpfungselement wirkenden Endabschnitt (410) des Anschlusselements (400) festgelegt sind.

In **Fig. 3b** ist ein Querschnitt durch eine zweite alternative Ausführungsform des Anschlusselements eines Flüssigkeitsfilters (100) gemäß Fig. 3a dargestellt, bei dem wiederum ein Endabschnitt (410) der zweiten Leitung (404) des Anschlusselements (400) das Dämpfungselement (700) ist. Im Gegensatz zu der Ausführungsform in Fig. 3a weist jedoch der Filtereinsatz (300) in dieser Ausführungsform keinen Stutzen (340) auf. Der Endabschnitt (410) des Anschlusselements (400) haltert den Filtereinsatz (300), indem er die Öffnung (318) im Anschlussdeckel (310) des Filtereinsatzes (300) in Form einer Steckverbindung (460) durchgreift und dabei abdichtet. Die Schwingungen, die sich vom Gehäuse (100) auf das Anschlusselement (400) übertragen, werden hier über das Dämpfungselement (700) nur gedämpft auf den Filtereinsatz (300) übertragen.

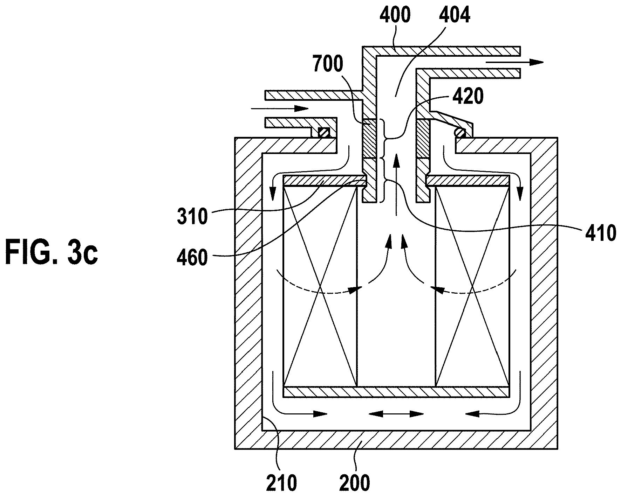

In **Fig. 3c** ist ein Querschnitt durch eine dritte alternative Ausführungsform des Anschlusselements eines Flüssigkeitsfilters (100) gemäß Fig. 3a dargestellt, bei dem ein Zwischenabschnitt (420) der zweiten Leitung (404) des Anschlusselements (400) das Dämpfungselement (700) ist. Der Filtereinsatz (300) weist in diesem Ausführungsbeispiel keinen Stutzen (340) auf. Der Endabschnitt (410) der zweiten Leitung (404) des Anschlusselements (400) haltert den Filtereinsatz (300), indem er die Öffnung (318) im Anschlussdeckel (310) des Filtereinsatzes (300) in Form einer Steckverbindung (460) durchgreift und dabei abdichtet.

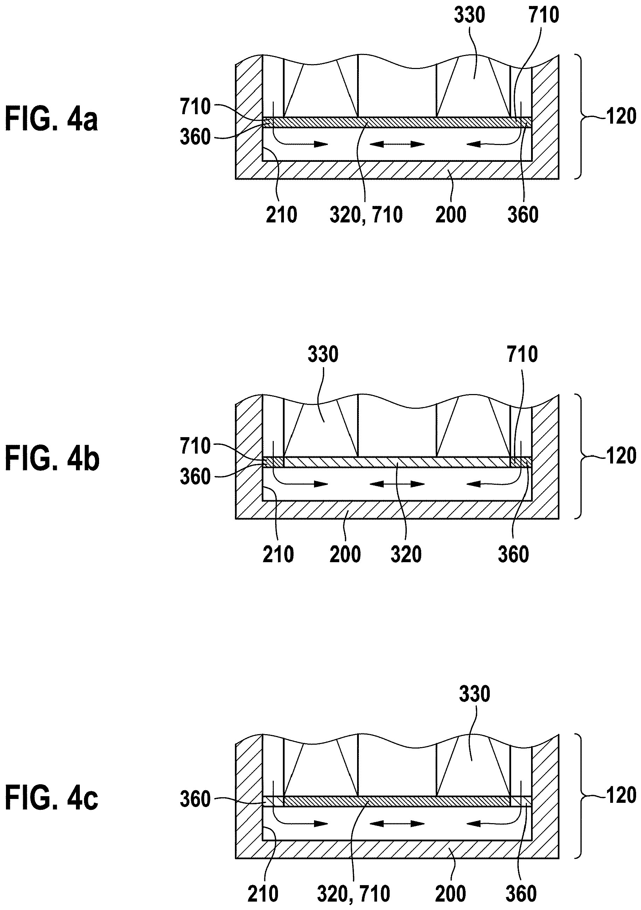

Die **Figuren 4a bis 4c** zeigen Ausführungsformen der Erfindung, bei denen der Filtereinsatz (300) im Endkappenbereich (120) des Gehäuses (200) mit dem Gehäuse (200) mittelbar oder unmittelbar in mechanischem Kontakt steht.

Zur radialen Halterung des Filtereinsatzes (300) im Gehäuse (200) kann es nämlich notwendig sein, dass der Filtereinsatz (300) an Stützstellen am Gehäuse (200) mechanisch abgestützt wird. Um bei solch einer Konstruktion des Flüssigkeitsfilters (100) einer Übertragung von Schwingungen des Gehäuses (200) auf den Filtereinsatz entgegenzuwirken, ist es erforderlich, alle mechanischen Kontaktstellen zwischen Filtereinsatz (300) und dem Gehäuse (200) schwingungstechnisch dämpfend zu entkoppeln. Dies kann dadurch erreicht werden, dass im Bereich jeder Kontaktstelle weitere Dämpfungselemente (710) so angeordnet werden, dass die Übertragung von Schwingungen des Gehäuses (200) auf den Filtereinsatz (300) gedämpft wird.

**Figur 4a** zeigt einen Querschnitt durch den Endkappenbereich (120) des Gehäuses (200) eines erfindungsgemäßen Flüssigkeitsfilters (100) gemäß einem dritten Ausführungsbeispiel. Dargestellt sind Bereiche mechanischer Kontaktstellen zwischen dem Gehäuse (100) und der Endkappe (320). Hierbei berühren äußere Teile der Endkappe (320) als Kontaktabschnitte (360) die Innenwand (210) des Gehäuses (200). Zur Dämpfung der Übertragung von Schwingungen vom Gehäuse (200) auf den Filtereinsatz (300) sind die Endkappe (320) und die Kontaktabschnitte (360) als weiteres Dämpfungselement (710) ausgeführt.

**Figur 4b** zeigt einen Querschnitt durch den Endkappenbereich (120) des Gehäuses (200) einer zweiten alternativen Ausführungsform eines Flüssigkeitsfilters (100) gemäß Fig. 4a. Wie in **Fig. 4a** berühren wiederum äußere Teile der Endkappe (320) als Kontaktabschnitte (360) die Innenwand (210) des Gehäuses (200). Im Gegensatz zur Ausführungsform von Fig. 4a besteht in dieser Ausführungsform die Endkappe (320) jedoch aus zwei unterschiedlichen Materialien. Dabei sind nur die Kontaktabschnitte (360) der Endkappe (320) als weitere Dämpfungselemente (710) ausgeführt.

**Figur 4c** stellt einen Querschnitt durch den Endkappenbereich (120) des Gehäuses (200) einer dritten alternativen Ausführungsform eines Flüssigkeitsfilters (100) gemäß Fig. 4a dar. Hierbei berühren wiederum äußere Teile der Endkappe (320) als Kontaktabschnitte (360) die Innenwand (210) des Gehäuses (200). Im Gegensatz zu den Ausführungsformen von Fig. 4a und Fig. 4b ist hier jedoch nur die Endkappe (320) als weiteres Dämpfungselement (710) ausgeführt. Die Kontaktabschnitte (360) dagegen weisen keine besonderen schwingungsdämpfenden Eigenschaften auf.

In weiteren, hier nicht dargestellten Ausführungsformen, können die Dämpfungselemente (700, 710) auch kombiniert beispielsweise am Anschlusselement (400) und am Anschlussdeckel (310) oder beispielsweise am Anschlusselement (400) und am Stutzen (340) oder in anderen Kombinationen der oben beschriebenen Ausführungsbeispiele ausgebildet sein.

Derartige, zuvor in den Figuren beschriebene Flüssigkeitsfilter (100) sind beispielsweise geeignet zum Einsatz als Kraftstofffilter oder Motorölfilter im Niederdruckkreislauf des Einspritzsystems bzw. des Schmierkreislaufs des Motors eines Kraftfahrzeugs. Ein solcher Flüssigkeitsfilter (100) kann dabei seinen Einsatzbereich in Benzin- und Dieselanwendungen von Kraftfahrzeugen haben. Weiterhin ist ein Einsatz eines derartigen Flüssigkeitsfilters (100) als Wasserfilter möglich, ohne auf die genannten Einsatzgebiete beschränkt zu sein.

Bei der Dämpfung der Übertragung von Schwingungen vom Gehäuse (100) auf den Filtereinsatz (300) bei derartigen Flüssigkeitsfiltern (100) ist es vorteilhaft, wenn eine Reduzierung der Amplituden der Schwingung in dem spezifischen Frequenzbereich erreicht wird, der für das "Freirütteln" von im Filterelement (330) festgehaltenen Partikeln verantwortlich ist. Die Dämpfungselemente (700, 710) stellen somit in allen erfindungsgemäßen Ausführungsformen einen Frequenzfilter dar, der im relevanten Frequenzbereich die Amplituden der anregenden Schwingung stark verringert. Für einen Flüssigkeitsfilter (100) stellen die Dämpfungselemente (700, 710) einen Frequenzbandpassfilter, besonders bevorzugt einen Tiefpassfilter dar, d.h. Frequenzen mit geringen Frequenzen werden nicht so stark gedämpft, während höhere Frequenzen stark gedämpft werden. Bevorzugt wirkt das Dämpfungselement stark dämpfend auf Frequenzen größer als 500Hz, besonders bevorzugt auf Frequenzen größer als 100Hz.

Bevorzugt bestehen dabei alle Dämpfungselemente (700, 710) der erfindungsgemäßen Ausführungsformen aus einem Material mit einem Elastizitätsmodul kleiner als 100 MPa. Besonders bevorzugt bestehen die Dämpfungselemente (700, 710) dabei aus Gummi, Kautschuk, Silikonkautschuk oder aus einem Kompositmaterial, wobei das Kompositmaterial aus wenigstens einem Material aus der Gruppe Gummi, Kautschuk oder Silikonkautschuk und aus wenigstens einem Material aus der Gruppe Aluminium oder einem thermoplastischen Kunststoff, insbesondere Polyoxymethylen (POM) besteht. Besonders bevorzugt wird durch die Auswahl des Materials und seiner Eigenschaften (über das Herstellungsverfahren gesteuerte Porosität, Dichte, Elastizitätsmodul, Glasübergangstemperatur, etc.) und die konstruktive Dimensionierung (Dicke, Durchmesser, Volumen, etc.) der Dämpfungselemente (700, 710), ein Frequenzbandpassfilter, bevorzugt ein Frequenztiefpassfilter realisiert.

Dadurch werden bei einem Einsatz des Flüssigkeitsfilters (100) beispielsweise in einem Kraftfahrzeug fahrzeugspezifische Schwingungen und Stöße, die sich auf das Gehäuse (200) übertragen, bei der Übertragung auf den Filtereinsatz (300) gedämpft. Dies bewirkt eine Verbesserung der Filterwirkung gegenüber einer ungedämpften Übertragung der Schwingungen, insbesondere wird damit erreicht, dass die Filterwirkung unter fahrzeugnahen Schwingungszuständen erhöht wird, da ein "Freirütteln" der im Filterelement (330) haftenden Partikel unterdrückt wird.

Besonders bevorzugt werden der Anschlussdeckel (310) und/oder der Stutzen (340) als Dämpfungselement (700) ausgebildet, wobei der Stutzen (340) in diesem Fall die Funktionen der Schwingungsdämpfung, und der Flüssigkeitsdurchleitung aus dem Filtereinsatz übernimmt. Idealerweise übernimmt der Stutzen (340) auch noch die Funktion der Abdichtung des Filtereinsatzes (300) gegenüber dem Anschlusselement (400), so dass auf ein separates Dichtelement verzichtet werden kann. In allen Ausführungsbeispielen trennen der Stutzen (340) und die zweite Leitung (404) die Schmutzseite (370) von der Reinseite (380) des Filtereinsatzes (300).

## Patentansprüche

1. Flüssigkeitsfilter, insbesondere für Kraftstoffe,
mit einem Gehäuse **(200),** in dem ein Filtereinsatz **(300)** angeordnet ist, wobei der Filtereinsatz **(300)** einen Anschlussdeckel **(310)** aufweist, wobei der Anschlussdeckel **(310)** eine Öffnung **(318)** aufweist,
und mit einem Anschlusselement **(400),**
wobei das Anschlusselement **(400)** auf dem Gehäuse **(200)** dicht festgelegt ist, wobei das Anschlusselement **(400)** für die Zuführung der Flüssigkeit in den Flüssigkeitsfilter **(100)** und/oder für die Ableitung der Flüssigkeit aus dem Flüssigkeitsfilter **(100)** vorgesehen ist, wobei der Filtereinsatz **(300)** über wenigstens ein Dämpfungselement **(700)** derart an dem Anschlusselement **(400)** festgelegt ist, dass die Übertragung von Schwingungen des Gehäuses **(200)** auf den Filtereinsatz **(300)** gedämpft wird,
**dadurch gekennzeichnet, dass**
der Filtereinsatz **(300)** nur mittels des Anschlusselements **(400)** im Gehäuse **(200)** befestigt ist, und dass der Filtereinsatz **(300)** zumindest bei Abwesenheit von an dem Gehäuse **(200)** angreifenden Schwingungsbelastungen die Innenwand **(210)** des Gehäuses **(200)** nicht berührt,
wobei der Anschlussdeckel **(310)** einen an der Öffnung **(318)** des Anschlussdeckels **(310)** angeordneten Stutzen **(340)** aufweist, wobei der Stutzen **(340)** wenigstens bereichsweise als Dämpfungselement **(700)** ausgebildet ist.

2. Flüssigkeitsfilter nach Anspruch 1, **dadurch gekennzeichnet, dass** das wenigstens eine Dämpfungselement **(700)** aus einem Material mit einem Elastizitätsmodul kleiner als 100 MPa besteht.

3. Flüssigkeitsfilter nach Anspruch 1 oder 2, **dadurch gekennzeichnet, dass** das wenigstens eine Dämpfungselement **(700)** aus Gummi, Kautschuk, Silikonkautschuk oder aus einem Kompositmaterial besteht, wobei das Kompositmaterial aus wenigstens einem Material aus der Gruppe Gummi, Kautschuk oder Silikonkautschuk und aus wenigstens einem Material aus der Gruppe Aluminium oder einem thermoplastischen Kunststoff, insbesondere Polyoxymethylen (POM) besteht.

4. Flüssigkeitsfilter nach einem der Ansprüche 1 bis 3, **dadurch gekennzeichnet, dass** das Anschlusselement **(400)** zumindest abschnittsweise als ein weiteres Dämpfungselement ausgebildet ist.

5. Flüssigkeitsfilter nach Anspruch 4, **dadurch gekennzeichnet, dass** ein Endabschnitt (410) des Anschlusselements (400), der dem Filtereinsatz (300) zugewandt ist, als das weitere Dämpfungselement ausgebildet ist.

6. Flüssigkeitsfilter nach einem der Ansprüche 4 oder 5, **dadurch gekennzeichnet, dass** der Filtereinsatz **(300)** direkt am weiteren Dämpfungselement festgelegt ist.

7. Flüssigkeitsfilter nach einem der Ansprüche 1 bis 6, **dadurch gekennzeichnet, dass** der Filtereinsatz **(300)** mit einem Filterelement **(330)** versehen ist, wobei das Filterelement **(330)** radial zur Längsachse des Filtereinsatzes **(300)** durchströmbar ist, wobei das Filterelement **(330)** zwei gegenüberliegende Stirnseiten aufweist und an seinen Stirnseiten dicht zwischen einem Anschlussdeckel **(310)** und einer Endkappe **(320)** festgelegt ist.

8. Flüssigkeitsfilter nach einem der Ansprüche 1 bis 7, **dadurch gekennzeichnet, dass** das Element, umfassend den Anschlussdeckel **(310)** und den Stutzen **(340),** einstückig ausgeführt ist.

9. Flüssigkeitsfilter nach einem der Ansprüche 1 bis 8, **dadurch gekennzeichnet, dass** der Stutzen **(340)** an seinem Außenumfang **(344)** und/oder an seinem Innenumfang **(346)** ein Profil **(348)** mit Rippenform aufweist, wobei der Stutzen **(340)** über das Profil **(348)** mit dem Anschlusselement **(400)** verbunden ist.

10. Flüssigkeitsfilter nach Anspruch 9, **dadurch gekennzeichnet, dass** das Profil (348) ein Tannenbaumprofil ist.

## Claims

1. Liquid filter, in particular for fuels,
having a housing (200) in which a filter insert (300) is arranged, wherein the filter insert (300) has a connection cover (310), wherein the connection cover (310) has an opening (318),
and having a connection element (400),
wherein the connection element (400) is fixed in a sealed manner on the housing (200), wherein the connection element (400) is provided for the feeding of the liquid into the liquid filter (100) and/or for the discharge of the liquid from the liquid filter (100), wherein the filter insert (300) is fixed via at least one damping element (700) to the connection element (400) such that the transmission of vibrations of the housing (200) to the filter insert (300) is damped,
**characterized in that**
the filter insert (300) is fastened in the housing (200) only by means of the connection element (400), and **in that** the filter insert (300) makes no contact with the inner wall (210) of the housing (200) at least in the absence of vibrational loads acting on the housing (200),
wherein the connection cover (310) has a connection piece (340) arranged at the opening (318) of the connection cover (310), wherein the connection piece (340) is formed at least regionally as a damping element (700).

2. Liquid filter according to Claim 1, **characterized in that** the at least one damping element (700) consists of a material which has a modulus of elasticity of less than 100 MPa.

3. Liquid filter according to Claim 1 or 2, **characterized in that** the at least one damping element (700) consists of rubber, natural rubber, silicone rubber or of a composite material, wherein the composite material consists of at least one material from the group of rubber, natural rubber or silicone rubber and of at least one material from the group of aluminium or a thermoplastic material, in particular polyoxymethylene (POM).

4. Liquid filter according to one of Claims 1 to 3, **characterized in that** the connection element (400) is formed at least sectionwise as a further damping element.

5. Liquid filter according to Claim 4, **characterized in that** an end portion (410) of the connection element (400), which end portion faces the filter insert (300), is formed as the further damping element.

6. Liquid filter according to either of Claims 4 and 5, **characterized in that** the filter insert (300) is fixed directly to the further damping element.

7. Liquid filter according to one of Claims 1 to 6, **characterized in that** the filter insert (300) is provided with a filter element (330), wherein the filter element (330) is able to be flowed through radially with respect to the longitudinal axis of the filter insert (300), wherein the filter element (330) has two opposing end sides and at its end sides is fixed in a sealed manner between a connection cover (310) and an end cap (320).

8. Liquid filter according to one of Claims 1 to 7, **characterized in that** the element, comprising the connection cover (310) and the connection piece (340), is formed in one piece.

9. Liquid filter according to one of Claims 1 to 8, **characterized in that** the connection piece (340) has a profile (348) with a ribbed form on its outer circumference (344) and/or on its inner circumference (346), wherein the connection piece (340) is connected to the connection element (400) via the profile (348).

10. Liquid filter according to Claim 9, **characterized in that** the profile (348) is a fir-tree profile.

## Revendications

1. Filtre à liquide, en particulier pour des carburants,
avec un boîtier (200), dans lequel un élément de filtre (300) est disposé, dans lequel l'élément de filtre (300) présente un couvercle de raccordement (310), dans lequel le couvercle de raccordement (310) présente une ouverture (318), et
avec un élément de raccordement (400),
dans lequel l'élément de raccordement (400) est fixé de façon étanche sur le boîtier (200),
dans lequel l'élément de raccordement (400) est prévu pour l'arrivée du liquide dans le filtre à liquide (100) et/ou pour l'évacuation du liquide hors du filtre à liquide (100),
dans lequel l'élément de filtre (300) est fixé à l'élément de raccordement (400) au moyen d'au moins un élément d'amortissement (700), de telle manière que la transmission de vibrations du boîtier (200) à l'élément de filtre (300) soit amortie,
**caractérisé en ce que** l'élément de filtre (300) n'est fixé dans le boîtier (200) qu'au moyen de l'élément de raccordement (400), et **en ce que** l'élément de filtre (300) ne touche pas la paroi intérieure (210) du boîtier (200) au moins en l'absence de sollicitations de vibration agissant sur le boîtier (200),
dans lequel le couvercle de raccordement (310) présente une tubulure (340) disposée à l'ouverture (318) du couvercle de raccordement (310), dans lequel la tubulure (340) est réalisée au moins localement sous la forme d'un élément d'amortissement (700).

2. Filtre à liquide selon la revendication 1, **caractérisé en ce que** ledit au moins un élément d'amortissement (700) se compose d'un matériau ayant un module d'élasticité inférieur à 100 MPa.

3. Filtre à liquide selon une revendication 1 ou 2, **caractérisé en ce que** ledit au moins un élément d'amortissement (700) se compose de gomme, de caoutchouc, de caoutchouc silicone ou d'un matériau composite, dans lequel le matériau composite se compose d'au moins un matériau du groupe gomme, caoutchouc ou caoutchouc silicone et d'au moins un matériau du groupe aluminium ou d'une matière plastique thermoplastique, en particulier de polyoxyméthylène (POM).

4. Filtre à liquide selon l'une quelconque des revendications 1 à 3, **caractérisé en ce que** l'élément de raccordement (400) est réalisé au moins en partie sous la forme d'un autre élément d'amortissement.

5. Filtre à liquide selon la revendication 4, **caractérisé en ce qu'**une partie d'extrémité (410) de l'élément de raccordement (400), qui est tournée vers l'élément de filtre (300), est réalisée sous la forme de l'autre élément d'amortissement.

6. Filtre à liquide selon une des revendications 4 ou 5, **caractérisé en ce que** l'élément de filtre (300) est fixé directement à l'autre élément d'amortissement.

7. Filtre à liquide selon l'une quelconque des revendications 1 à 6, **caractérisé en ce que** l'élément de filtre (300) est muni d'un élément filtrant (330), dans lequel l'élément filtrant (330) peut être traversé radialement par rapport à l'axe longitudinal de l'élément de filtre (300), dans lequel l'élément filtrant (330) présente deux côtés frontaux opposés et est fixé de façon étanche sur ses côtés frontaux entre un couvercle de raccordement (310) et une coiffe d'extrémité (320).

8. Filtre à liquide selon l'une quelconque des revendications 1 à 7, **caractérisé en ce que** l'élément, comprenant le couvercle de raccordement (310) et la tubulure (340), est réalisé en une seule pièce.

9. Filtre à liquide selon l'une quelconque des revendications 1 à 8, **caractérisé en ce que** la tubulure (340) présente à son pourtour extérieur (344) et/ou à son pourtour intérieur (346) un profil (348) en forme de nervures, dans lequel la tubulure (340) est assemblée à l'élément de raccordement (400) au moyen du profil (348).

10. Filtre à liquide selon la revendication 9, **caractérisé en ce que** le profil (348) est un profil de sapin.
